(19) Europäisches Patentamt
European Patent Office
Office européen des brevets

(11) **EP 2 778 992 A1**

(12) **EUROPEAN PATENT APPLICATION**

(43) Date of publication:
**17.09.2014 Bulletin 2014/38**

(51) Int Cl.:
***G06F 17/50*** *(2006.01)*

(21) Application number: **14158745.1**

(22) Date of filing: **11.03.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **15.03.2013 US 201361792734 P
31.07.2013 US 201313955606**

(71) Applicant: **Sikorsky Aircraft Corporation
Stratford, CT 06615 (US)**

(72) Inventors:
• **Nardi, Aaron T.
East Granby, CT Connecticut 06026 (US)**
• **El-Wardany, Tahany Ibrahim
Bloomfield, CT Connecticut 06002 (US)**
• **Viens, Daniel V.
Mansfield Center, CT Connecticut 06250 (US)**
• **Lynch, Matthew E.
Vernon, CT Connecticut 06066 (US)**
• **Hsu, Arthur
South Glastonbury, CT Connecticut 06073 (US)**
• **Klecka, Michael A.
Vernon, CT Connecticut 06066 (US)**
• **Gu, Wenjiong
Glastonbury, CT Connecticut 06033 (US)**

(74) Representative: **Klunker . Schmitt-Nilson . Hirsch
Patentanwälte
Destouchesstraße 68
80796 München (DE)**

(54) **Additive typology optimized manufacturing for multi-functional components**

(57) A computing device includes a processor, is operative on a plurality of constraints associated with a component, and integrates the constraints with a design optimization methodology across multiple variables including additive manufacturing constraints to generate a specification for the component. The component may be fabricated in accordance with the specification.

FIG. 4

EP 2 778 992 A1

**Description**

This application claims the benefit of U.S. Provisional Application No. 61/792,734, filed on March 15, 2013, and entitled "Additive Topology Optimized Manufacturing For Multi-Functional Components", the entire contents of which are incorporated by reference.

Additive manufacturing (AM) has been investigated for the last two decades and currently has received considerable attention. Parts have been produced using various printing techniques (e.g., three-dimensional or 3D printing techniques). For example, sheeting welding, wire welding, melting in powder beds or powder deposition via laser and electron beam melting, and injections using powder have all been used. These techniques have varying degrees of geometric complexity, but generally have few restrictions in comparison to conventional machining. The use of cold spray is also being considered in connection with additive manufacturing. Each type of technique has associated with it advantages and disadvantages, particularly with respect to solid state processing, fine grain structures, and mechanical properties.

Separately, computer technologies and optimization techniques may be used to optimize a design of a component based on one or more criteria or parameters, such as stiffness, weight, and stress. The component often has complicated features that are difficult or impossible to produce through conventional machining.

An embodiment of the disclosure is directed to a method comprising: receiving, by a computing device comprising a processor, a plurality of design and manufacturing constraints associated with a component, the design constraints comprising a desired quality of the component and the manufacturing constraints comprising a constraint imposed by a manufacturing technique by which the component will be made, integrating, by the computing device, the design and manufacturing constraints according to a design optimization methodology across a plurality of variables to generate a candidate component specification, and performing, by the computing device, surface optimization to optimize the candidate component specification according to variations in the design constraints to generate a final specification for the component.

Particular embodiments may include any of the following optional features, alone or in combination:

The method further may comprise receiving the final specification at an additive manufacturing machine, and producing the component according to the final specification using an additive manufacturing technique corresponding to the manufacturing constraints.

The design constraints may comprise combinations of dimensions of the component, surfaces of the component, and load paths of the component during use; and the manufacturing constraints may comprise combinations of a line of sight associated with the component during manufacture, an angle associated with the component, an angle between normal and adjacent surfaces of the component, a tolerance associated with the component, and a tooling feature, in addition to mapping of required supports and fixtures.

The design optimization methodology may be specified in terms of at least one of: weight, reliability, performance, complexity, and cost.

The final specification may comprise at least one of: a handling specification, a manufacturing specification, an assembly specification, and a use specification.

The method further may comprise: integrating, by the computing device, the design and manufacturing constraints and design optimization methodology with a multi-functional optimization for the component when generating the final specification for the component, wherein the multi-functional optimization may comprise an optimization based on at least two competing requirements for the component.

The method further may comprise: fabricating the component in accordance with the final specification; and implementing the fabricated component on at least one of an aircraft and an assembly for the aircraft.

An embodiment of the disclosure is directed to an apparatus comprising: at least one processor, and memory having instructions stored thereon that, when executed by the at least one processor, cause the apparatus to: receive a plurality of design and manufacturing constraints associated with a component, the design constraints comprising a desired quality of the component and the manufacturing constraints comprising a constraint imposed by a manufacturing technique by which the component will be made, integrate the design and manufacturing constraints according to a design optimization methodology across a plurality of variables to generate a candidate component, and perform surface optimization to optimize the candidate component specification according to variations in the design constraints to generate a final specification for the component.

Particular embodiments may include any of the following optional features, alone or in combination:

The design constraints may comprise combinations of dimensions of the component, surfaces of the component, and load paths of the component during use; and the manufacturing constraints may comprise combinations of a line of sight associated with the component during manufacture, an angle associated with the component, an angle between normal and adjacent surfaces of the component, a tolerance associated with the component, and a fixturing feature.

The design optimization methodology may be specified in terms of at least one or more of: weight, reliability, performance, complexity, and cost.

The final specification may comprise at least one of: a handling specification, additive manufacturing processes specification, an assembly specification, and a use specification.

The instructions, when executed by the at least one processor, may cause the apparatus to: integrate the design and manufacturing constraints and design optimization methodology with a multi-functional optimization for the component when generating the final specification for the component; and additively manufacture the component in accordance with the final specification, wherein the multi-functional optimization may comprise an optimization based on at least two competing requirements for the component.

An embodiment of the disclosure is directed to a method comprising: receiving, by a computing device comprising a processor, an indication of a component to be repaired, and performing, by the computing device, shape optimization to optimize a specification for the component by optimizing an interface location between parent material and repair material and designing a transition to account for differences in material properties.

Particular embodiments may include any of the following optional features, alone or in combination:

The transition may comprise at least one of: a grading of the parent material with the repair material and a grading of the repair material with a third material. The method further may comprise: repairing the component based on the specification.

An embodiment of the disclosure is directed to a computer readable medium encoded with processing instructions for implementing one or more of the methods described herein using one or more processors.

An embodiment of the disclosure is directed to an end-item fabricated in accordance with one or more of the methods described herein.

Additional embodiments are described below.

BRIEF DESCRIPTION OF THE DRAWINGS

The present disclosure is illustrated by way of example and not limited in the accompanying figures in which like reference numerals indicate similar elements.

FIG. 1 is a schematic block diagram illustrating an exemplary computing system in accordance with one or more embodiments;

FIG. 2 illustrates a flow chart of an exemplary method in accordance with one or more embodiments;

FIG. 3 illustrates a cross-section of material deposited using a cold spray process in accordance with one or more embodiments;

FIG. 4 illustrates a framework and flow chart for additive topology optimized manufacturing processes in accordance with one or more embodiments;

FIG. 5A illustrates an architecture to integrate multiple models for design optimization methodology in accordance with one or more embodiments;

FIG. 5B illustrates a flow chart of an exemplary multi-models integration method in accordance with one or more embodiments;

FIG. 6 illustrates a bracket and applied dynamic load in accordance with one or more embodiments;

FIG. 7 illustrates a prediction of a stress gradient or transition at a major failure location of the bracket of FIG. 6.

FIGs. 8A-8B illustrates a flow chart of an exemplary method for designing the bracket of FIG. 6 using an optimization framework in accordance with one or more embodiments;

FIGs. 9A-9D illustrates a nozzle used for spraying a part following curved spray paths and legs created following curved spray paths in accordance with one or more embodiments;

FIGs. 10A-10H illustrates deposits in accordance with one or more embodiments;

FIGs. 11A-11G illustrates cold sprayed deposits in accordance with one or more embodiments;

FIGs. 12A-12C illustrates a design space in accordance with one or more embodiments;

FIG. 13 illustrates a topology optimization result inside the design space of FIG. 12 in accordance with one or more embodiments;

FIGs. 14A-14E illustrates a design progression for fabricating a component or device in accordance with one or more embodiments;

FIGs. 15A-15B illustrates a resulting topology optimization for the component/device of

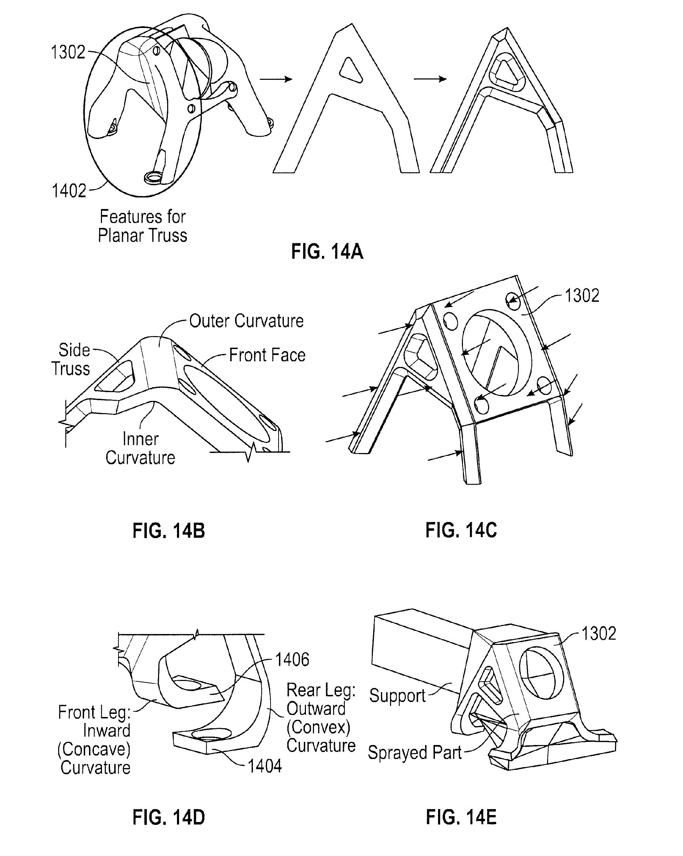

FIGs. 14A-14E, interpreted for cold spray additive manufacturing in accordance with one or more embodiments;

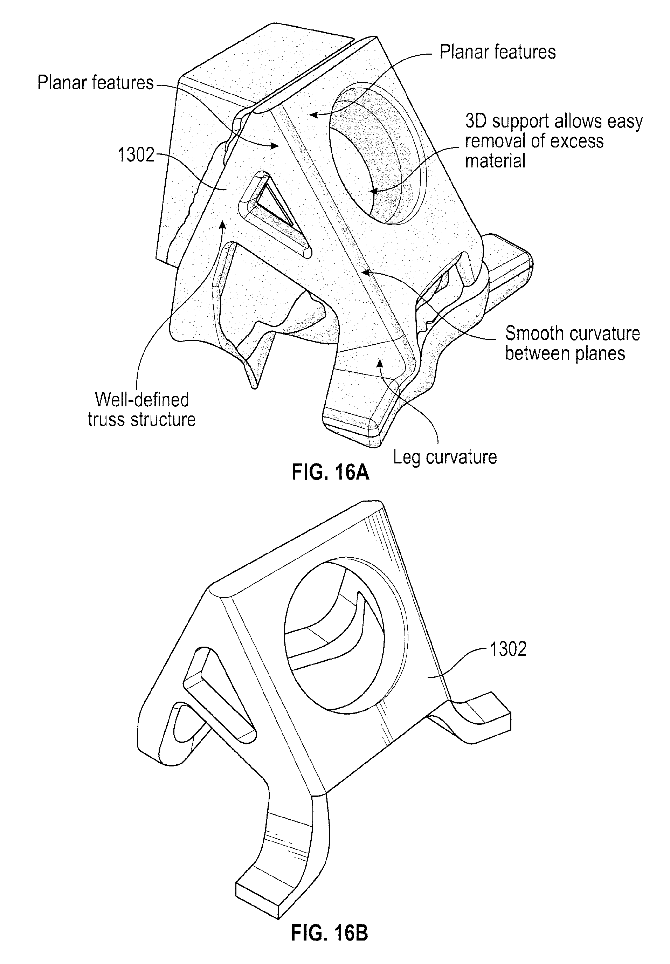

FIGs. 16A-16B illustrates the component/device of FIGs. 14A-14E just after spraying and following post-machining in accordance with one or more embodiments;

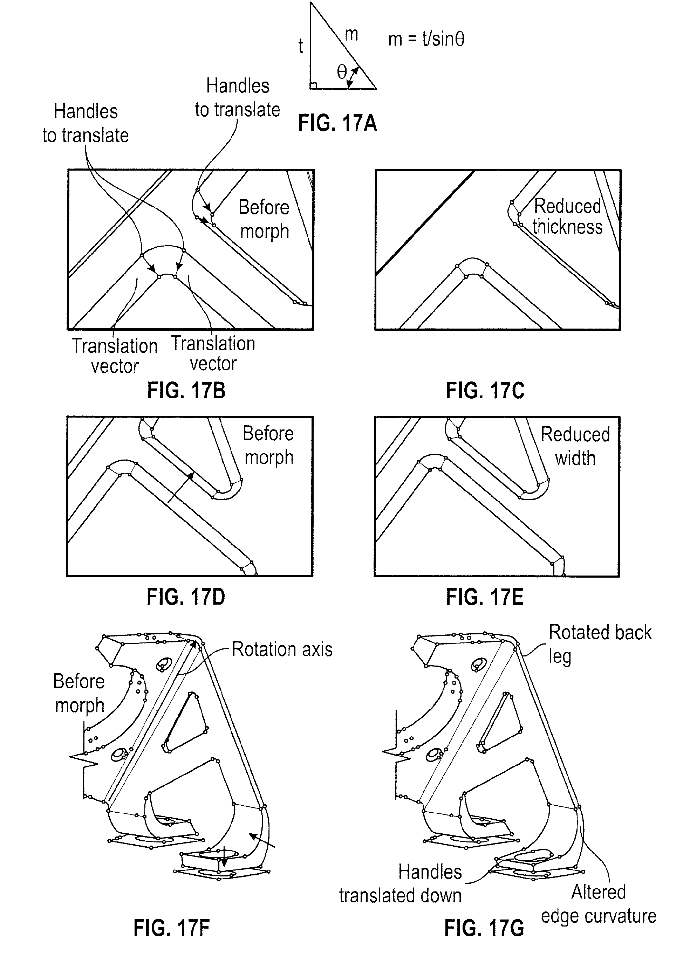

FIGs. 17A-17G illustrates a trigonometric relationship between thickness change and angled morph distance in connection with a mesh in accordance with one or more embodiments;

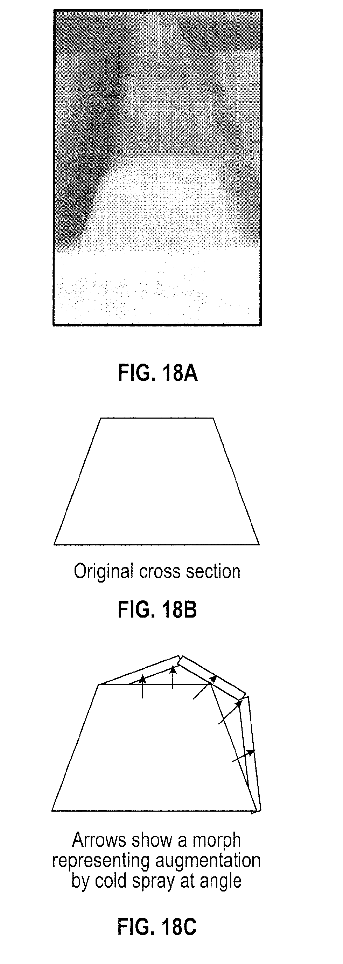

FIGs. 18A-18C illustrates a cold spray deposit cross section and a morph to represent a cold spray procedure to augment a deposit angle in accordance with one or more embodiments;

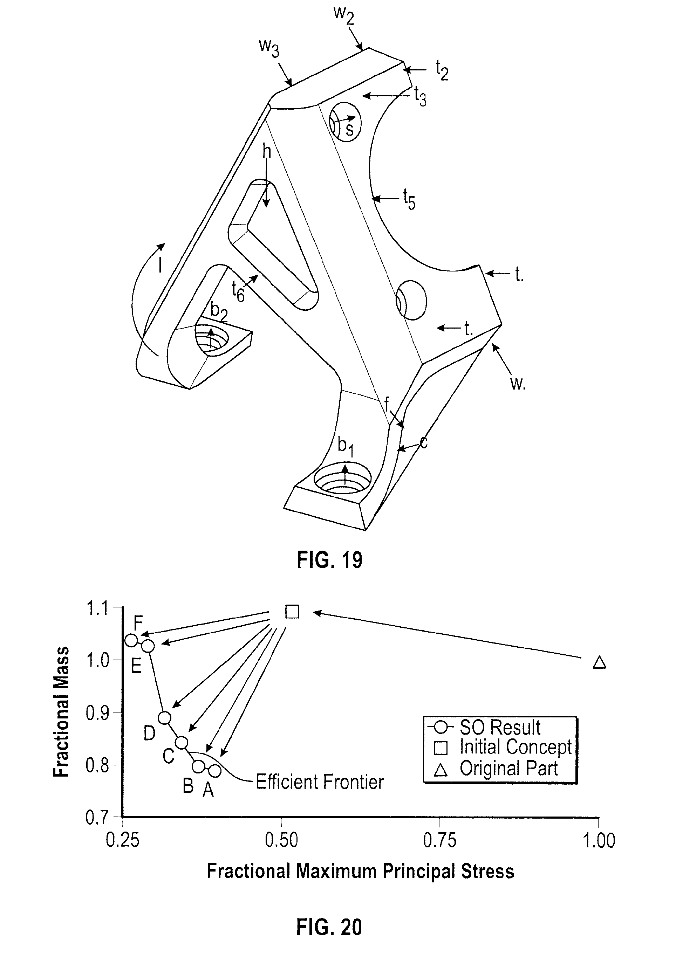

FIG. 19 illustrates morphs applied to a single-material shape optimization in accordance with one or more embodiments;

FIG. 20 illustrates an efficient frontier representation between the optimal weight and optimal maximum principal stress representation, from a shape optimization result in accordance with one or more embodiments;

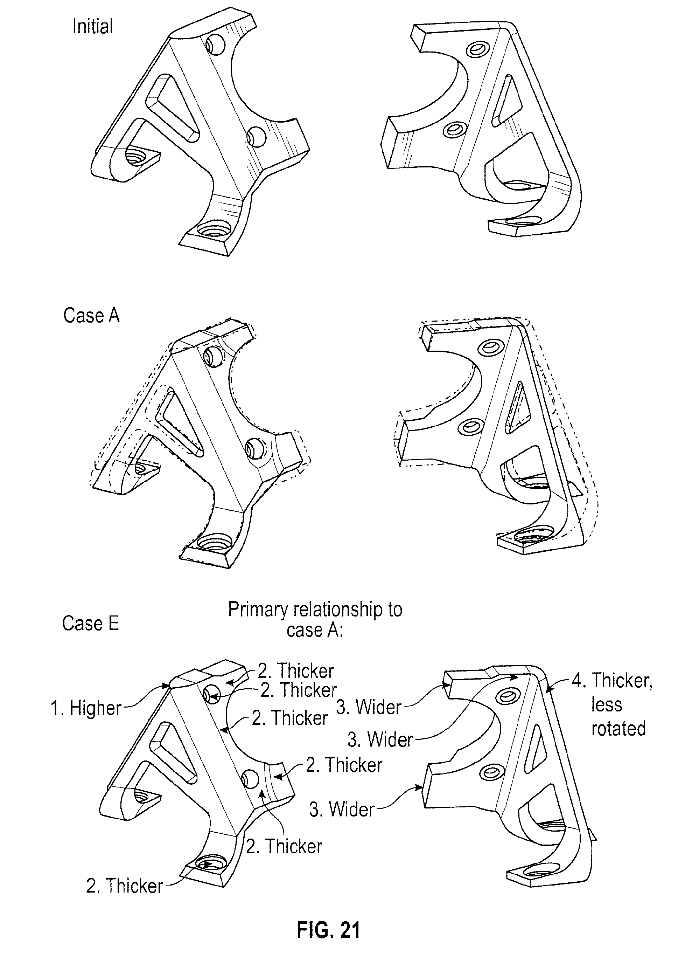

FIG. 21 illustrates an initial part and shape-optimized parts subject to different maximum principal stress constraints in accordance with one or more embodiments;

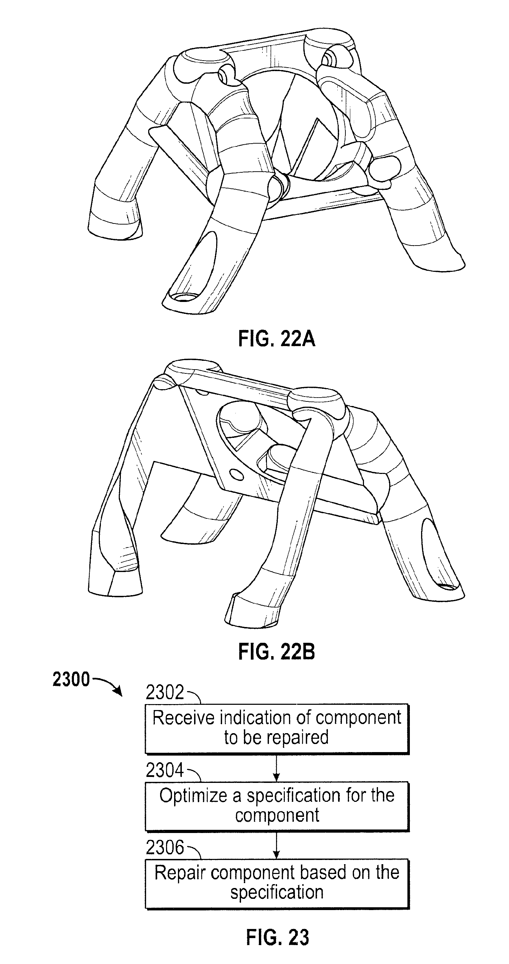

FIGs. 22A-22B illustrates a topology optimization concept interpretation for an additive manufacturing process in accordance with one or more embodiments; and

FIG. 23 illustrates a flow chart of an exemplary method in accordance with one or more embodiments.

DETAILED DESCRIPTION

It is noted that various connections are set forth between elements in the following description and in the drawings (the contents of which are included in this disclosure by way of reference). It is noted that these connections in general and, unless specified otherwise, may be direct or indirect and that this specification is not intended to be limiting in this respect. In this respect, a coupling between entities may refer to either a direct or an indirect connection.
Exemplary embodiments of apparatuses, systems, and methods are described for facilitating additive topology optimized manufacturing (ATOM). ATOM may combine the features of one or more design tools (e.g., Topology Optimization) and additive manufacturing techniques to produce an integrated outcome that is better than using either tool/technique alone. In some embodiments, in order to realize the greatest returns, the design tools may incorporate the features of the additive manufacturing techniques or processes in the optimization, and select the additive process based on the optimized result. Additionally, for multi-functional components which include, e.g., strength requirements, tribology requirements, and weight requirements, and where it is possible to grade structures from one material to another to better tailor these properties, flexibility may be provided in one or more algorithms to account for variations.
ATOM may include any of the features described herein, and may provide integrated outcomes that are improved relative to conventional design and manufacturing processes. For example, use of ATOM may generate lighter, stronger, and better performing components than can be produced from additive manufacturing processes alone.

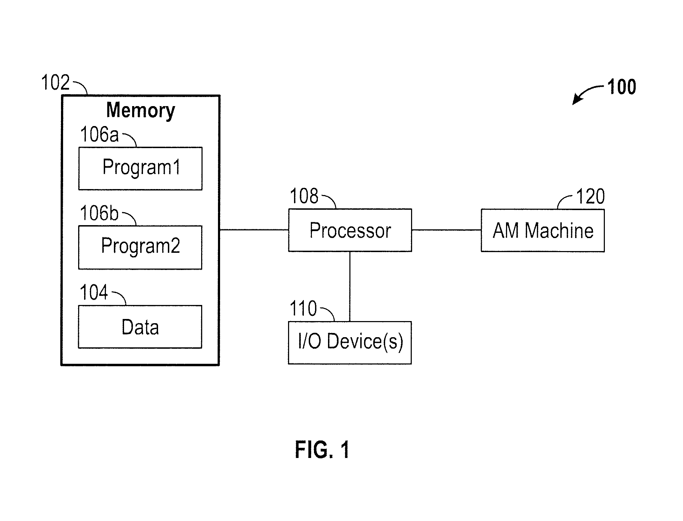

Referring to FIG. 1, an exemplary computing system 100 is shown, which implements design tools and/or topology optimization according to aspects of the invention. The system 100 is shown as including a memory 102. The memory 102 may store data 104. The memory 102 may store executable instructions used to implement the topology optimization according to aspects of the invention. The executable instructions may be stored or organized in any manner and at any level of abstraction, such as in connection with one or more processes, routines, procedures, methods, etc. As an example, at least a portion of the instructions are shown in FIG. 1 as being associated with a first program 106a and a second program 106b.

The instructions stored in the memory 102 may be executed by one or more processors, such as a processor 108. The processor 108 may be coupled to one or more input/output (I/O) devices 110. In some embodiments, the I/O device(s) 110 may include one or more of a keyboard or keypad, a touchscreen or touch panel, a display screen, a microphone, a speaker, a mouse, a button, a remote control, a joystick, a printer, a telephone or mobile device (e.g., a smartphone), a sensor, etc. The I/O device(s) 110 may be configured to provide an interface to allow a user to interact with the system 100 in the generation of a specification according to aspects of the invention.

As shown, the specification is transferred to an AM machine 120 which performs the AM techniques according to the specification in order to create the end item. While not required in all aspects, the AM machine 120 can include processors which interpret the specification, and controls other elements which apply the materials using robots, printers, lasers or the like to add the materials as layers or coatings to produce the AM end item. The AM machine 120 can receive the specification manually, such as where an end user re-enters or uploads the specification into the AM machine 120, or digitally via a wired and/or wireless network. While shown as part of the system 100, it is understood that the AM machine 120 can be separate from the system 100 such as where the AM machine 120 is in a separate location from the elements of the system 100 which generates the specification.

The system 100 is illustrative. In some embodiments, one or more of the entities may be optional. In some embodiments, additional entities not shown may be included. For example, in some embodiments the system 100 may be associated with one or more networks, i.e., as to communicate with tools performing topology optimization to optimize manufacture using ATOM to create the components. In some embodiments, the entities may be arranged or organized in a manner different from what is shown in FIG. 1. One or more of the entities shown in FIG. 1 may be associated with one or more of the devices or entities described herein.

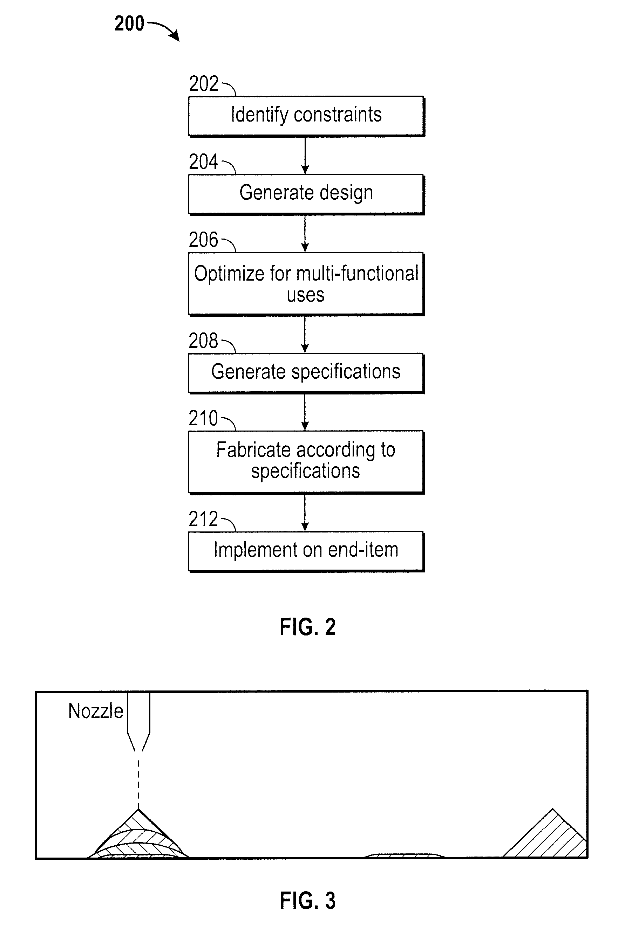

Turning now to FIG. 2, a flow chart of an exemplary method 200 is shown. The method 200 may be executed in connection with one or more components, devices, or systems, such as those described herein (e.g., system 100 of FIG. 1). The method 200 may be used to obtain an optimum design for one or more components. Such components may be manufactured in accordance with the design.

In block 202, one or more constraints (e.g., manufacturing constraints, environmental constraints, use constraints, etc.) may be identified for the component. For example, one or more of: dimensions of the component, surfaces, line of sight, angles (e.g., minimum or maximum angles), angle between normal and adjacent surfaces, tolerances, and tooling features or constraints may be identified as part of block 202.

In block 204, a design may be generated. The design may be based on the constraints of block 202. For example, as part of block 204, multiple variables may be varied, potentially as part of an iterative algorithm, to identify a globally optimal design across the variables. The variables may be associated with one or more models, such as one or more physics-based models that may be related to, e.g., a functionality of the component or fabrication of the component. An optimal design may be determined in accordance with one or more factors or parameters, such as reliability, performance, complexity, and cost.

In block 206, the design may be optimized for multi-functional uses. For example, in the context of a component to be used as a jet engine turbine disk, it may be a first requirement to have a course microstructure at the edges of the disk to mitigate against so-called "creep performance." On the other hand, a second requirement may be to have a fine microstructure at the bore or center of the disk to reduce the likelihood of the disk bursting. Thus, aspects of the disclosure may be used to obtain a disk design that can accommodate both (competing) requirements.

In block 208, one or more specifications may be generated and/or output (e.g., output to one or more I/O devices 110). The specifications of block 208 may be based on one or more inputs, such as the data or information associated with one or more of blocks 202-206 described above. The specifications of block 208 may include one or more handling specifications, manufacturing or assembly specifications, use specifications, etc. Such specifications can be stored electronically or using printed plans depending on the end use.

In block 210, the component may be fabricated in accordance with the specifications of block 208.

In block 212, the fabricated component of block 210 may be implemented on an end-item, such as an assembly of an aircraft or the aircraft itself.

The method 200 is illustrative. In some embodiments, one or more of the blocks or operations (or portions thereof) may be optional. In some embodiments, additional operations not shown may be included. In some embodiments, the operations may execute in an order or sequence different from what is shown.

Embodiments of the disclosure may provide an optimization framework that enables an integration of multi-scale/multi-physics simulation codes to perform structural optimization design for additively manufactured components. The framework may first utilize topology optimization to maximize stiffness for a conceptual design, while refinement may be obtained using shape optimization. Cold spray may be selected as the additive manufacturing process and its constraints may be identified and included in the optimization scheme. A subsequent optimization problem may focus on stress-life fatigue analysis. In an illustrative embodiment, a component weight may be reduced by up to 20% while stresses may be reduced by up to 75% and the rigidity may be improved by up to 37%. Programs may be implemented using Altair software and in-house loading code. An optimized design may be produced by a cold spray process.

As one skilled in the art would appreciate, additive manufacturing (AM), also referred to as 3D printing, is a layer-by-layer technique of producing objects directly from a digital model. AM technology enables low cost product assembly and the building of any number of products with complex shapes/geometries, complex material compositions and designed property gradients. Current research seeks to integrate AM processes and design exploration methods to synthesis of shapes, geometric meso-structures, and microstructures to achieve desired performance. Manufacturing constraints may be defined based on the capabilities and limitations associated with the AM processes such as: speed of build, accuracy, surface geometry, tolerances, wall thickness and feature size, material properties, and range of materials. Examples of AM techniques usable include, but are not limited to, sheeting welding, wire welding, melting in powder beds or powder deposition via laser and electron beam melting, injections using powder, and cold spray. For purposes of illustration, cold spray is discussed below without limitation thereto as it is understood that other AM techniques can be used instead of or in addition to cold spray as a deposition technique.

An AM optimization framework may systematically arrange and merge design and analysis tools for a preliminary design stage of a fabricated component. A multi-objective optimization framework may be used to design AM components which are governed by mutually interacting physical phenomena to achieve a required or specified performance. The developed framework may be based on the functional decomposition of AM processes. The framework may also identify generic sub-functions and various physical principles that support the conceptual design process and thus aid in decision-making in the early stages of design.

In some embodiments, a developed optimization framework is provided that uses optimization techniques to produce designs well-suited to the cold spray AM process. Combined topology optimization (TO) methodology and AM process may be used to redesign and produce a highly loaded bracket. The AM process may replace tradition sheet metal forming. A multi-physics programming scheme for the conceptual design is described below. During the conceptual design, multiple loadings, multilevel AM constrains, weight and fatigue stress constraints may be coupled to settle the associated difficulties in considering the whole structure as a pre-defined design domain. The commercial Altair® software package of Hyperworks including OptiStruct and HyperStudy may be used. An integration of the design disciplines and AM process requirements may be obtained.

While AM offers an array of features, it may require consideration of a unique set of manufacturability decisions. AM may entail new constraints that are not present in conventional manufacturing as follows:

Workpiece support design - AM may require a support structure onto which material can be deposited. The support design and its removal after deposition may be an important issue in AM;

Material deposition restrictions - FIG. 3 shows the cross-section of material deposited using a cold spray process. The different shapes are examples of the possible material cross-section after deposition. FIG. 3 also indicates that the angle of material deposit may need to be included when designing a component made by AM;

Deposition nozzle clearance from the component - The geometry of the component and the incumbent support design may need to account for the nozzle physical space and movement;

Finishing - A rough surface condition may be obtained after the deposition of the powder. Post machining may be required and may be included in the design constraints; and

Manufacturing objective function - Manufacturing cost can be introduced as a constraint in the objective function of the optimization framework.

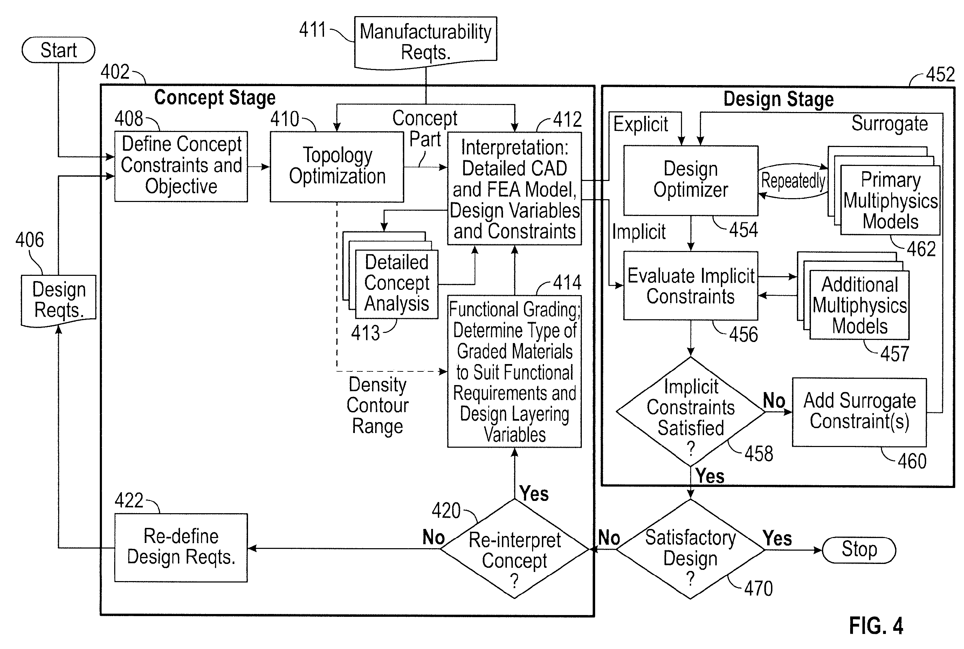

As described above, a framework for additive topology optimized manufacturing processes may be developed, where design and analysis tools may be systematically arranged and merged for a preliminary design stage of a component fabricated by AM. An example of the framework, shown in FIG. 4, comprises two main stages. The first stage 402 may be associated with a concept stage, while a second stage 452 may define or provide the required steps for the detailed design stage.

Both design and AM requirements 406 may be input in the concept generation stage 402. These requirements 406 may define the concept constraints and objective 408 for the TO modeling approach and design space 410. The TO design 410, which may be a function of manufacturability requirements 411, may then be interpreted in computer aided design/computer aided drawing tool(s) (CAD) 412, with the AM process characteristics guiding the interpretation. Finite element analysis (FEA) may be performed on the CAD model 412 to determine the part performance and stress state. The CAD model 412 may be a function of a detailed concept analysis 413, potentially as part of an iterative process. A design optimizer module 454, using shape optimization methods, may then be activated including the specified multi-physics models. The process may be repeated until the new design satisfies the objectives. A functional grading module 414 can also be used to enhance the part performance. The design interpretation may then be utilized in CAD 412 to modify the design and repeat the analysis until the proposed design satisfies all requirements including fatigue analysis. To that end, the approach may be divided into a "concept stage" 402, which may rely heavily on the inputs of a design engineer, and a "design stage" 452 where parameters associated with the design may be optimized using one or more tools (e.g., automated software tools).

The TO 410 may output a "concept part" which may be interpreted into the design concept. The design concept may be "parameterizable" into a vector of design variables $x = (x_1, x_2, , x_n)$. The design optimizer 454 may seek to find the optimal $x^*$ according to an objective function $f(x)$ such that all constraints are satisfied. A detailed evaluation (e.g., FEA) of the concept part may then be performed to identify the critical areas where a wider design space would be beneficial. Functional grading (e.g., functional grading 414) may also be folded into this approach. The parameters that govern the grading such as discrete decisions about the materials or their thickness may be specified as decision variables which may then be optimized. Once the set of design variables is determined, the objective function $f(x)$ may need to be expressed entirely in terms of x; similarly, constraints may need to be expressed completely in terms of the design variables. The set of constraints may be partitioned into: (1) explicit constraints that may be evaluated during the iterative design optimization methodology process, and (2) implicit constraints that may be set aside from the design optimizer 454 and which are constraints that necessarily result from the explicit constraints. An example of an explicit constraint may be a variable that has a tangible value, e.g., stress < 100ksi, thickness = 0.5". An example of an implicit constraint may be a variable that is intangible, e.g., the status of whether a hole is present, whether a cross section for a cold spray part is a particular shape (e.g., trapezoidal), etc.

In some embodiments, after the design optimizer 454 has output an optimized design $x^*$, a verification or determination may be made regarding whether the implicit constraints are satisfied 456, potentially based on one or more functional or multiphysics models 457. If one or more implicit constraints are not satisfied (458), a surrogate constraint 460 may be added to the set of explicit constraints that aims to avoid violating the implicit constraint. A surrogate constraint 460 may be used in an optimization to represent a similar functional relationship as another set of one or more constraints that are typically more difficult to evaluate computationally. In some cases, a surrogate constraint 460 is exact, but in other cases, the functional relationship is approximate and may need to be verified by an exact model.

In formulating an optimization model, a goal may be to find a set of decision variables that maximizes an objective while satisfying a set of constraints. Ideally, all of the constraints may be explicit in the sense that they may directly express an explicit relationship between decision variables and a constraining limit. However, there may be situations where some of the relationships between decision variables are relatively complex that they cannot be expressed explicitly in a closed-form equation. As such, a model may be run or executed to test if a proposed set of decision variables provides a feasible solution, but it may be difficult or even impossible to explicitly express the constraint as an equation. For example, a computational fluid dynamics (CFD) model may run for an hour that outputs a property (e.g., temperature) and then a test may be performed to determine if the temperature exceeds a limit, but it may be difficult or impossible to express a constraint directly in terms of the decision variables. A surrogate constraint 460 may be used to express the key drivers as an equation (like an explicit constraint) against a limit, where the drivers relate the effect of the decision variable and where the limit may be determined experimentally. If the real constraint is to ensure that the temperature does not exceed a limit, there might not be an equation that directly links the dimensions (e.g., the dimensions in three-dimensional space x, y, and z) of a heat sink with the temperature. Instead, there may be a model that, given x, y and z, simulates the heat flow and outputs the temperature. If it is known that the temperature is related to the mass of the object, then the surrogate constraint 460 may express that the mass (given by x*y*z*density) may be at least a minimum mass M. The surrogate constraint 460 may then become x*y*z*density >= M. The value of M may be determined experimentally using a detailed model. If, for a given value of M, the detailed model from the multiphysics model (457 and/or 462) shows that a particular set of decision variables is infeasible (i.e., the temperature is too hot), then the limit might not be tight enough. The limit may be tightened in the surrogate constraint 460 (i.e., increase M) to the point where the solution is barely feasible in the detailed model.

In some embodiments, the design optimizer 454 may be re-run or re-executed with both the explicit and surrogate 460 constraints and manufacturability constraints (e.g., manufacturability requirements 411) will be inserted. The design optimizer 454 may make calls to one or more functional or multiphysics models 462 and consider a different solution. The models 462 may include one or more of stress strain models, thermal gradient models, heat transfer models, aerodynamic models, chemical reaction models, diffusion models, etc. The models 462 may evaluate the performance of a given solution (e.g., stress, displacement), and thus present a series of tests of various potential scenarios the end part may experience in order to evaluate the design under a variety of model scenarios. The design optimizer 454 may explore the design space and normally terminate with an optimal solution that optimizes a given objective function while satisfying the (explicit) constraints. The design optimizer 454 may have an "inner loop" where a certain set of design variables are considered and an "outer loop" where another set of design variables are considered. The inner loop optimization might be performed by OptiStruct and a custom outer loop may be used.

Assuming that the implicit constraints are satisfied (458), a determination may be made whether a satisfactory design has been obtained (470). If a satisfactory design is obtained (470), the process flow may stop or end. Otherwise, if a satisfactory design is not obtained (470), a determination may be made whether the concept needs to be re-interpreted (420). If the concept needs to be re-interpreted (420), flow may proceed to the functional grading (414). Otherwise, if the concept does not need to be re-interpreted (420), design requirements may be redefined (422) to generate (new) design requirements (406).

Numerous tools may be available to evaluate various forms of physical behavior. The tools may be integrated within an optimization framework (e.g., the framework of FIG. 4). In some embodiments, software (e.g., HyperStudy software) may be used to call for different multi-physics/multi-models 457, 462 to be run in tandem every iteration. With this setup, the software may allow a user-level, solver-neutral, multi-disciplinary, exploration, study, and optimization for fatigue analysis based shape optimization.

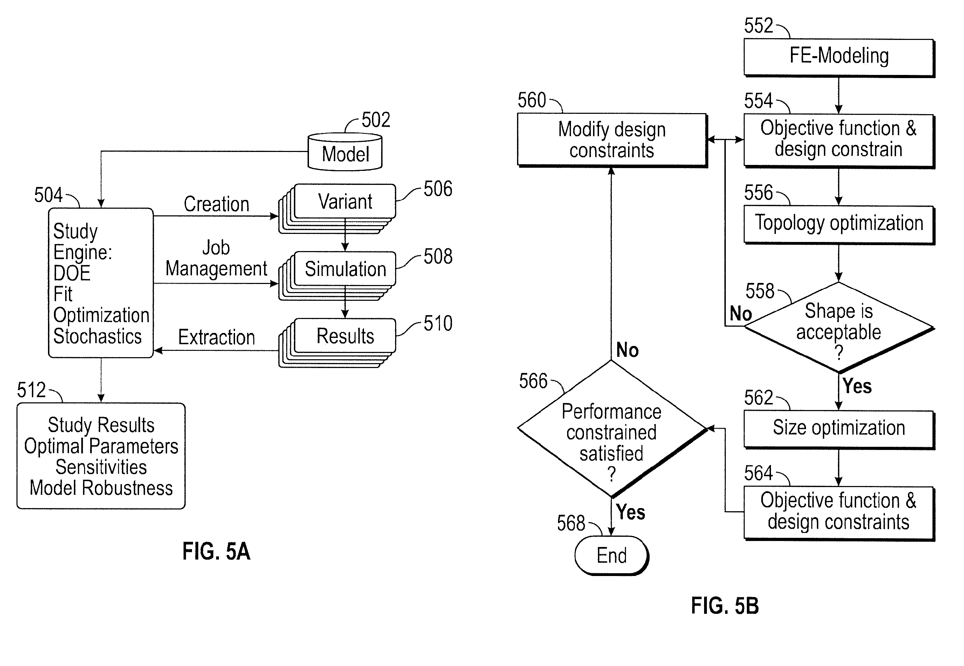

FIG. 5A illustrates an embodiment of an architecture that can be used to integrate multiple models for design optimization methodology such as that performed in the design optimizer 454 of FIG. 4. The architecture may be based on the software described above. One or more models 502 may serve as input to a study engine 504. The study engine 504 may cause one or more variants 506 to be created. The variants 506 and the study engine 504 may drive one or more simulations 508, which may generate results 510. The results may be extracted by the study engine 504. The study engine may study the results 512, potentially based on, or in terms of, one or more parameters, sensitivities, model robustness, etc.

FIG. 5B illustrates a flow chart of a multi-models integration method. In block 552, finite element (FE) models may be generated.

In block 554, an objective function and design constraints may be determined or specified.

In block 556, TO may be performed to generate, e.g., a shape for the subject component.

In block 558, a determination may be made whether the shape is acceptable. If not, flow may proceed to block 554, potentially after modifying one or more constraints in block 560. If the shape is acceptable, flow may proceed to block 562.

In block 562, a size optimization may be performed with respect to the component.

In block 564, an objective function and design constraints may be determined or specified.

In block 566, a determination may be made whether the performance constraints are satisfied. If not, flow may proceed to block 560. If the performance constraints are satisfied, flow may proceed to block 568 and the method may end.

In some embodiments, the design process may begin with the formulation of functional requirements and performance constraints and then continues with conceptual design, optimization and finally detailing of the component. Different components may be sized for an applied load and may be optimized for weight or fatigue with consideration of other factors. The factors that influence the design may directly or indirectly arise from performance requirements, component layout, selected material and methods of additive manufacturing. Requirements in design optimization methodology for additive manufacturing process can be divided into the following performance constraints: (1) structure performance constraints (e.g., allowable stresses, weight, stiffness, loading, fatigue performance, thermal load, deformation and distortion, dynamic behavior, mesh selection), (2) properties of materials produced by AM processes (e.g., corrosion resistance, bonding strength, mechanical and thermal properties), and (3) AM constraints (e.g., design of support structures, build accuracy, surface finish and z-direction mechanical properties, minimum feature size constraint, overhang constraint).

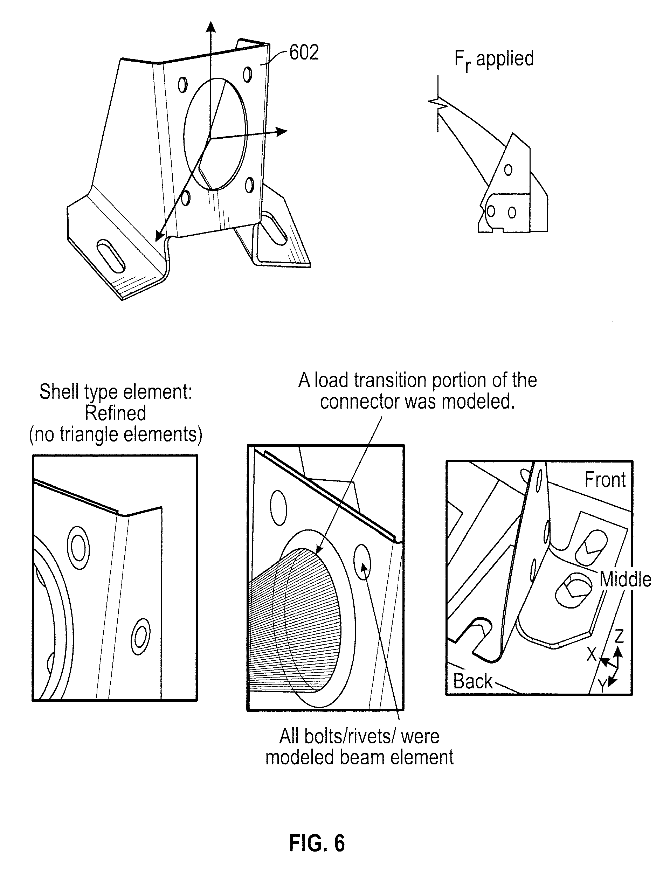

As an example of an application of the design optimization methodology according to aspects of the invention will be described in relation to FIGs. 6 through 8. In this example, aspects of this disclosure may be used to redesign a failed component, such as a structural mount (bracket 602) using one or more software packages. The bracket 602 may be used to affix components to a structural shell under dynamic loading conditions. Sheet metal forming may currently be used to fabricate the bracket 602. FIG. 6 shows the bracket 602 and applied dynamic load, which may cause the bracket 602 face to deform leading to stress concentration along bolted areas.

A finite element model using shell elements may be developed to verify the current design and identify areas of high stress and failure. Nonlinear geometrical elastic-plastic analysis with contact interactions between mount surface and bracket may be used to predict stress state and deformation. The dynamic loading used in the analysis is shown in FIG. 6. The mounting surface may be modeled as a rigid body and the face connection may be assumed to be structurally critical.

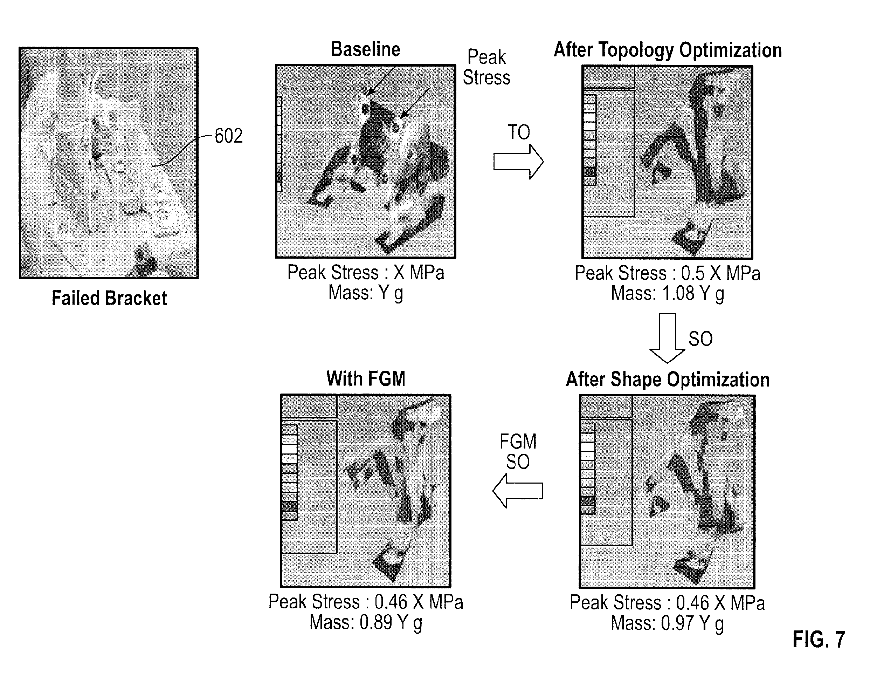

FIG. 7 shows the prediction of a stress gradient or transition at the major failure location of the bracket 602. FIG. 7 includes a picture of the failed bracket 602 and reflects that the failure location correlates well with the prediction.

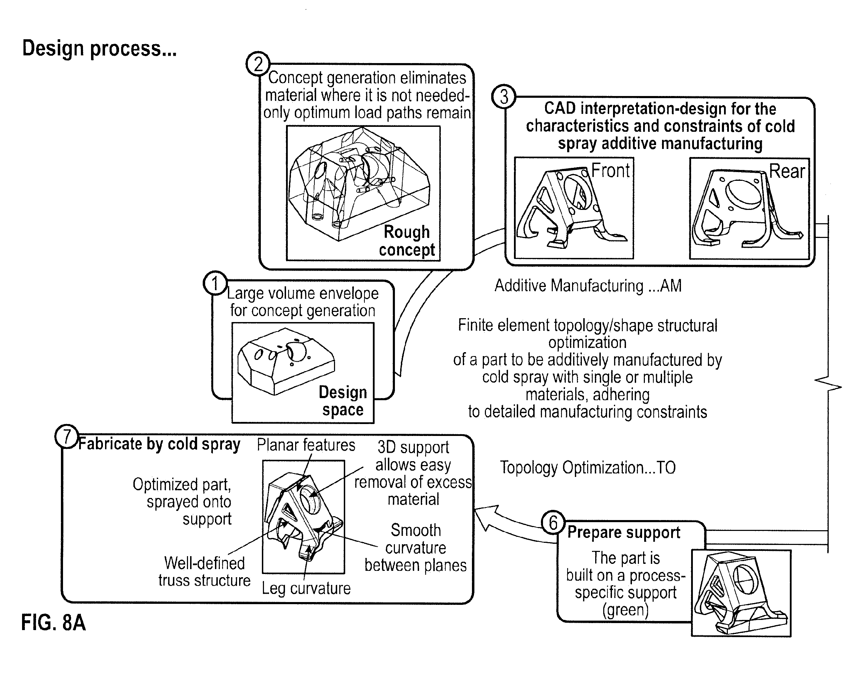

The optimization framework may be based on the FE results, the requirements for the design, material selection, and cold spray constraints. FIGs. 8A-8B illustrates the approach used to combine AM and topology optimization to design and manufacture the selected bracket 602.

As a first or preliminary step, the given design requirements may be obtained and a subset of constraints may be extracted that applies at the concept level, which may be: 1) Geometry constraints (design space); 2) Interface constraints; 3) Minimum feature size constraints; 4) Load conditions for which the performance constraints must be satisfied; and 5) Performance constraints. The general process flow may start by defining a region whose entire volume is eligible to participate in the load path. Then the region may then be meshed for FEA, loads and specifications may be given, and the TO may be allowed to run.

The design space (FIG. 8A, item 1) may be a volume of material which is subject to possible removal. The entire region may participate in the analysis and the less critical portions may be removed. The setup of the design space may be the first opportunity to incorporate AM constraints. What remains may be the topological optimum (FIG. 8A, item 2): the material which most efficiently carries the load. The OptiStruct software package can enforce certain manufacturing constraints specified by the user on a TO run, which may be modified to incorporate additive manufacturing constraints. The result from the TO step may provide a rough sketch of the optimized part and may be interpreted to accommodate the AM process, the required part performance, and life.

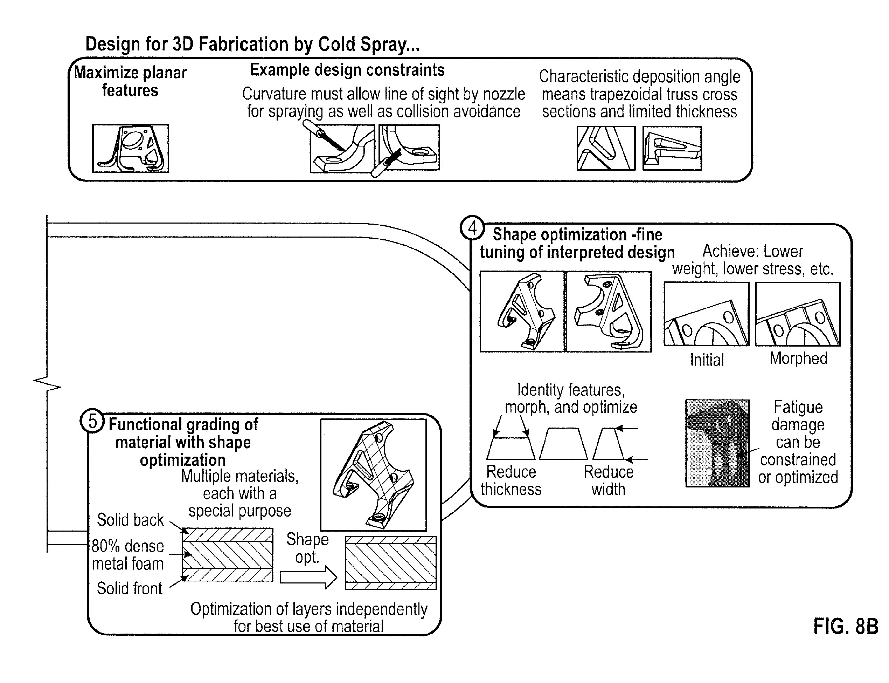

The design interpretation (FIG. 8A, item 3) may be subject to judgment and experience of the designer. The rules for interpreting TO results for AM may be largely ill-defined and vary depending on the process. The development and implementation of the cold spray design rules may control the design interpretation of the TO result. The FE analysis of this design may indicate a reduction in the maximum stresses by 40% and the design may be used as the basis for subsequent shape optimization conducted with the OptiStruct software. The use of the interpreted design for fine tuning is often called "shape optimization (SO)". SO may begin with a solid model meshed for FEA (FIG. 8B, item 4). The designer may identify parameters of the meshed model to optimize. Then, the designer may apply morphs to mesh, literally stretching or compressing the FEA mesh to increase or decrease dimensions of features. Multiple morphs can be applied simultaneously using the HyperMorph tool inside the HyperMesh software. Design responses may also be included by setting constraints such as maximum allowable stress, and setting an optimization objective such as minimum part weight. OptiStruct may conduct SO by treating each individual morph as a design variable and finding the optimum application of each morph to achieve the objective without violating the constraints. A full finite element simulation may be performed at one or more iterations of SO and a further reduction in maximum stresses may lead to a total reduction of up to 75% with a mass reduction of up to 21% from the original configuration.

As part of the flow of FIG. 8, a functional grading of the material with SO may be performed (FIG. 8B, item 5). A support may be prepared (FIG. 8A, item 6), and the component/bracket may be fabricated using cold spray (FIG. 8A, item 7).

As described above, topology optimization (TO) and shape optimization (SO) are procedures that suggest optimal use of material for very efficient structures. Additive manufacturing (AM) has the capability to physically place material in 3D locations, perhaps as specified by TO/SO. In some cases, AM may be the only way to manufacture very complex designs. Integration of both technologies may be performed in connection with an open design space to obtain superior performance compared to conventional manufacturing. Learning how to integrate TO/SO with AM may be an important task if the two processes are to work together to maximize their combined power. The challenge of the task may be increased because AM processes can vary greatly in physics and method. For example, the cold spray AM process may produce structures that vary greatly in shape compared to laser melting AM processes.

Design and structural optimization guidelines are disclosed herein for cold spray AM structures. The feasibility of designing and optimizing a part for cold spray including TO, design interpretation with the proposed guidelines, and SO using morphs consistent with cold spray characteristics is described. The analysis indicates that there may be a tradeoff between stress and mass, but the combined process may deliver or generate a structure at much lower stress (e.g., 3X reduction in peak stress in at least one illustrative embodiment) with the capability to be much lighter than the original part (e.g., 20% reduction in weight). The general approach to specifying design guidelines, interpreting TO results, and applying SO may be directly or indirectly applicable to other AM processes-such as other spray deposition techniques-in addition to cold spray and can lead to synergistic efficiencies in part design and manufacture.

In light of the emerging interest in cold spray for AM and the rapidly evolving power and capability of TO/SO, a logical connection between the two is how to design a bulk part for cold spray and what considerations are necessary to optimize the part. Aspects of this disclosure develop geometric design guidelines and a TO/SO methodology for a cold spray AM process and lay the theoretical groundwork for future design of bulk parts made by cold spray with or without TO/SO. The general principles described herein for practical TO/SO part design could be applied to cold spray and/or other AM processes as well. Cold spray may be subjected to constraints which may be shared by other processes; therefore description of one or more techniques in connection with cold spray may be applicable to those other AM processes.

A non-exhaustive set of design and structural optimization guidelines for cold spray is provided as follows (with respect to a design solution for a particular problem described in further detail below):

(1) maximize the use of planar trusses and planar features;

(2) allow a gradual transition between features on different planes for smooth curvature and minimal spray disruption;

(3) allow line-of-sight between the cold spray nozzle and features, plan spray path including stand-off requirements and collision avoidance;

(4) use curved legs for gradual transition between assembly components, if applicable;

(5) use trapezoidal, triangular, or other geometric cross sections to represent the characteristic cold spray deposition angle;

(6) enforce limited thickness based upon cross-section aspect ratio; and

(7) design for a removable 3D substrate.

In some instances, a robot can move a nozzle (e.g., the nozzle of FIG. 3) in space using multiple axes with few limitations, subject only to the robot and the physical dimensions of a cold spray booth. Movements by the robot in a single plane, however, (a) are generally easier to implement in programming the paths and (b) generally result in more uniform deposits with better material properties.

Cold spraying of a part may be done continuously, and despite a potential requirement for planar features, some transition from one plane to another may occur. The transition may occur with uninterrupted spray. A continuous transition may result in a smooth and curved deposit. Sharp transitions on exterior surfaces might not be possible due to the nature of the particle deposits. Sharp transitions on the exterior surfaces might not be advisable from a stress concentration standpoint.

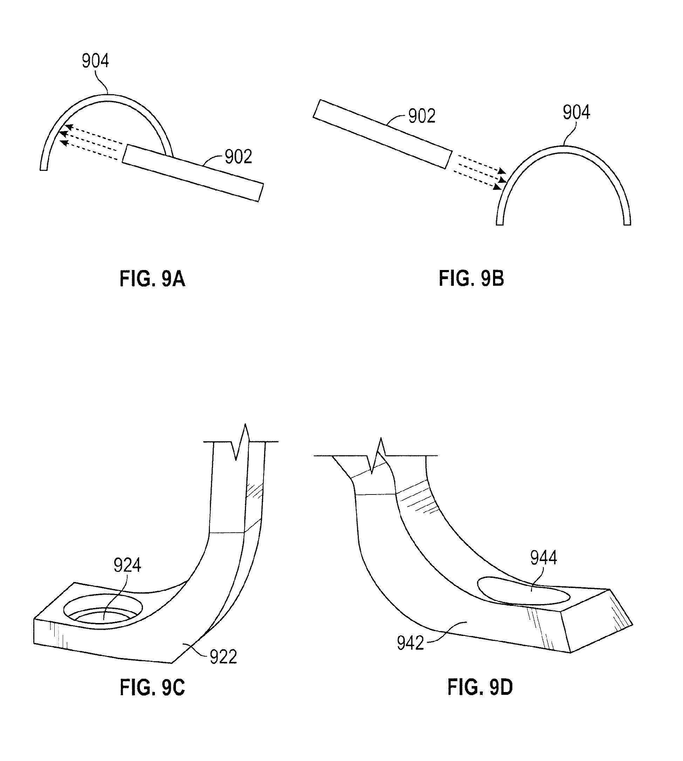

The part may be designed with a plan for spraying in mind that will allow a line-of-sight between the cold spray nozzle and features to be deposited. When spraying curves, attempting to spray a part from the concave side might not always be successful because it could lead to collisions between a nozzle 902 and deposit 904 as shown in FIG. 9A. Spraying from the convex side may be a safer strategy as shown in FIG. 9B since the nozzle 902 does not collide with the deposit 904. However, there may be instances where spraying must be done on the concave side. The designer may use judgment to best handle such cases, including potentially using a maximum angle criterion for concave surfaces.

A TO solution may include truss-like structures, and a truss that joins to adjacent assembly components can be described as a "leg", as will be described further below. Based on a potential requirement for line-of-sight and gradual transition between cold sprayed components, a cold spray deposit approximating such a feature can gradually transition from the plane of a truss into the plane of an assembly to form a leg. Two legs created in this manner are shown in FIG. 9C, which shows a leg 922 and in FIG. 9D, which shows a leg 942. The fastener holes 924 and 944 may be drilled and counterbored following cold spray deposition. As shown in FIG. 9C, the leg 922 may represent the recommended convex-side spraying produced by the nozzle 902 positioned as in FIG. 9B. As shown in FIG. 9D, the leg 942 may be sprayed from the concave side produced by the nozzle 902 positioned as in FIG. 9A, enabled by taking proper precautions in nozzle path planning.

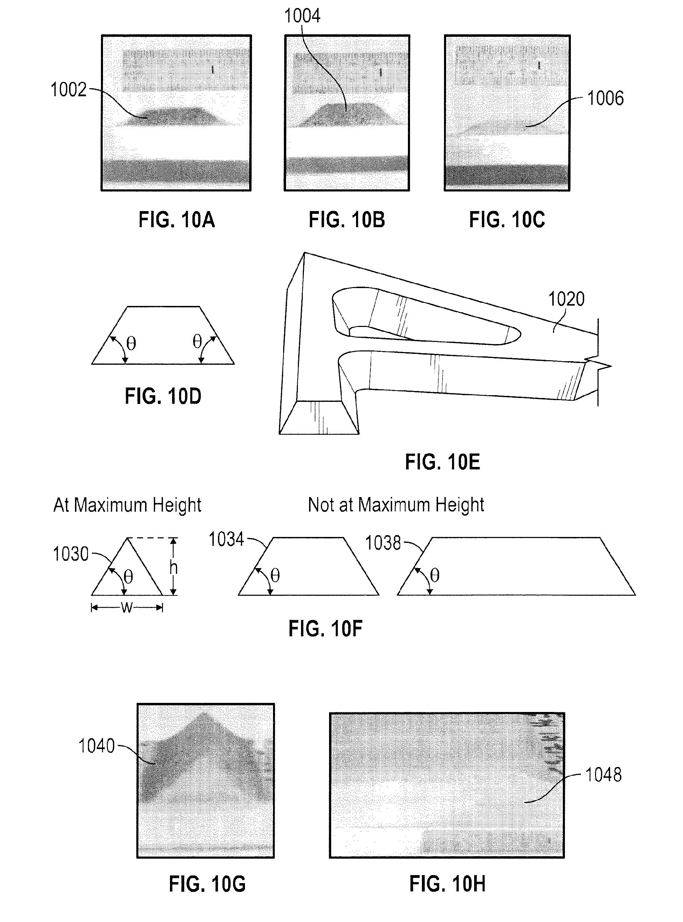

Referring to FIG. 10, cold spray deposits 1002-1006 often have cross sections with a characteristic angle, θ, caused by erosion at the side of the deposit. FIGs. 10A-10C provides several examples. In this disclosure, these cross sections 1002-1006 may be approximated as trapezoidal (FIG. 10D) and incorporated into the designed structure 1020 as shown in FIG. 10E. If needed, based on the material and processing conditions, other cross-sectional shapes such as circular arcs could be more appropriate and implemented with analogous treatment.

FIG. 10F provides an illustration on the limitation on the thickness of the cross section (e.g., cross sections 1002-1006). In the maximum possible height-to-width ratio (left) (1030), the cross section becomes triangular rather than trapezoidal because it is at the maximum possible height, $h_{max}$. Erosion of the deposit by incoming powder may prevent any further buildup. As the width increases, $h_{max}$ may increase according to equation #1:

$$h_{max} = \frac{w}{2} \tan \theta \qquad (1)$$

Therefore the two cross sections in the middle and right (1034 and 1038, respectively) are trapezoidal because $h < h_{max}$. Examples of a deposit at its maximum height 1030 and of a very wide deposit much shorter than its maximum height (e.g., 1038) are shown in FIG.10G (1040) and FIG. 10H (1048), respectively.

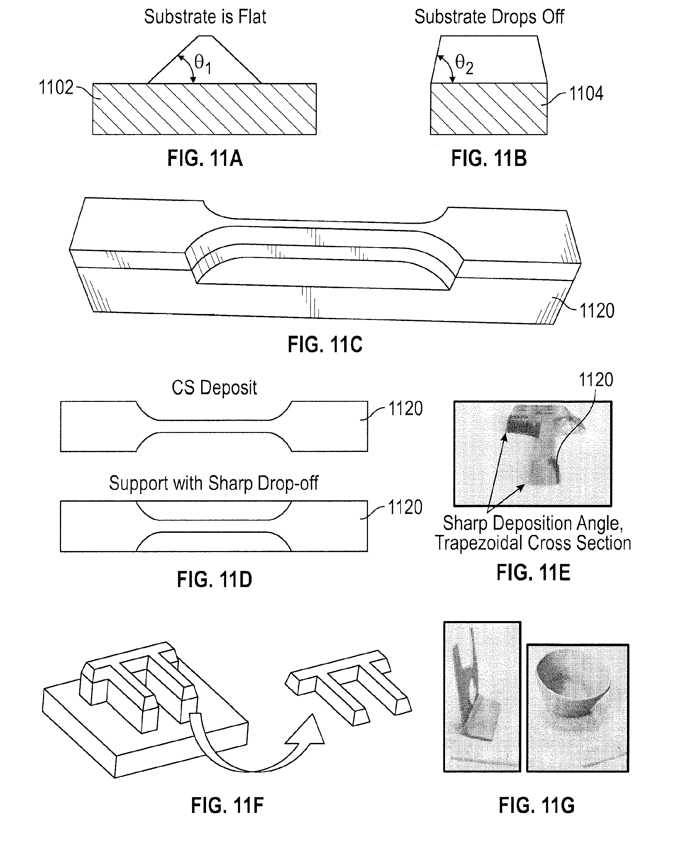

The characteristic angle of a cold sprayed deposit may behave differently depending upon whether the substrate is flat (FIG. 11A) (1102) or falls off abruptly (FIG. 11B) (1104). In particular, the deposition angle may tend to be shallow if the substrate is flat but sharp if the substrate falls off. A cold spray sample 1120 fabricated with such a sharp drop-off is shown in FIGs. 11C-11E. The drop-off may be dictated by the design of the substrate (FIG. 11C). If the deposit is somehow removed from the substrate (FIG. 11D) it may stand alone with a steep-angled trapezoidal cross section (FIG. 11E). The angles can vary with the type of material being cold-sprayed. A substrate that falls off may open up a larger design space than a flat substrate due to the sharper angles.

FIG. 11C-11E shows the support serving as a substrate for 3D fabrication of parts by cold spray. The cold spray nozzle can be oriented toward the support in 3D and powder may adhere where it impacts at the proper angle, velocity, and standoff distance. Release of the part may be predicated upon the sprayed powder sticking well enough to form a good deposit (e.g., in an amount greater than a threshold), but not well enough to effect a very strong bond with the substrate, allowing eventual separation. Or, if the substrate is sacrificial (e.g. removed by a selective chemical etch or thermal processing), the deposit may also be separated.

Designing the support so that portions are raised where trusses are desired may ensure that the cold-sprayed material builds up with a sharp characteristic angle and forms trusses with a relatively large allowable thickness. The support can serve as a "negative image" of the part. The concept is illustrated in FIG. 11F. The cold spray deposit may be free-standing when released from the substrate (FIG. 11G). This technique also allows for improved precision over the nozzle spot size alone by limiting the size of the negative feature being sprayed upon.

TO may be implemented using one or more tools or software, such as OptiStruct 11 and associated HyperWorks tools. In some embodiments, TO may be implemented in connection with a statically loaded structural component. A design process may be used to replace an existing part design with a new design. The design process may be based on the use of cold spray in accordance with the the above guidelines and experience. The description that follows outlines the problem setup, results, and interpretation in a particular embodiment.

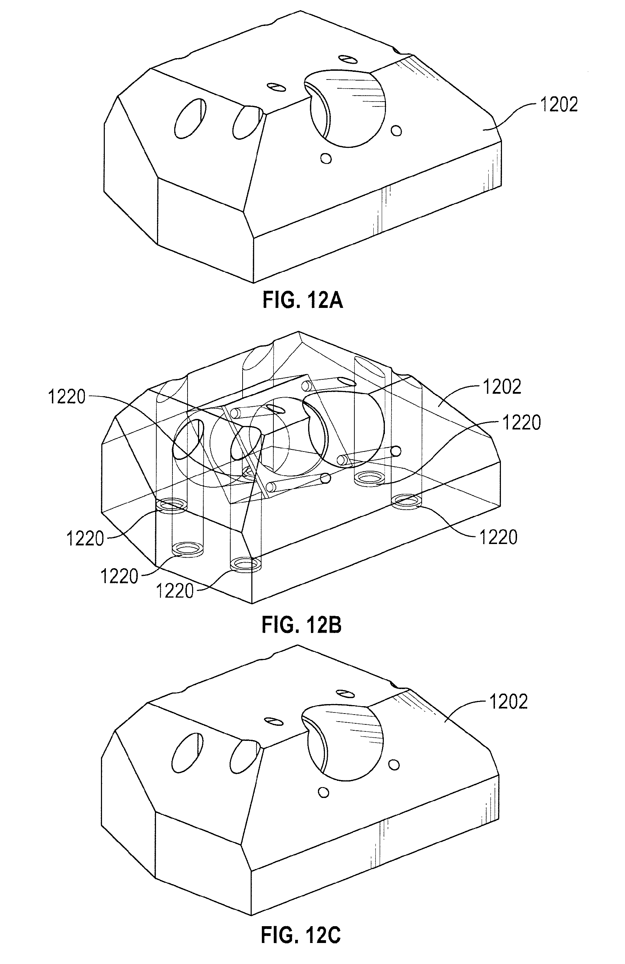

Setup of the design space may be the first opportunity to incorporate (additive) manufacturing constraints. The solid design space 1202 in this illustrative embodiment is shown in FIG. 12A. Pathways for important fasteners and assembly components were removed from the design space and appear as holes in the solid model. A transparent view (FIG. 12B) shows how the non-design regions (e.g., 1220) are associated with it. These non-design regions 1220 may provide a fixed connection to adjacent assembly components and might not be subject to TO. The design space 1202 may be meshed for FE analysis using first-order tetrahedral elements (FIG. 12C) and TO may be performed with loading conditions.

It may be determined that the minimum dimension size constraint was useful to enforce cold spray requirements. Specifying the minimum dimension size may ensure that the TO result will feature components close to the size that can be made by cold spray with a flat substrate or one with drop-off.

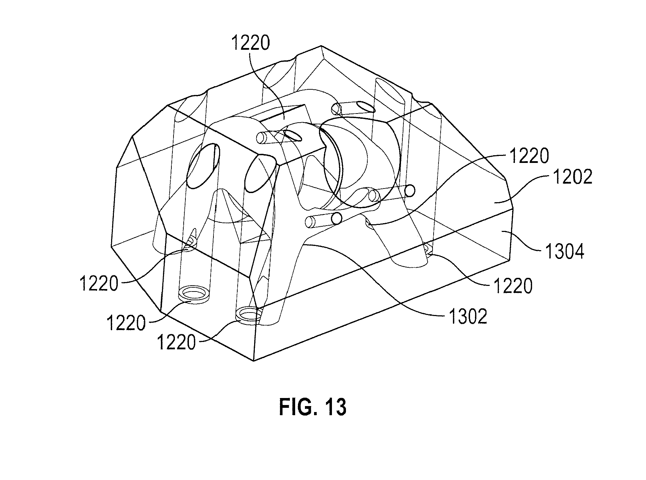

In some instances, it may be desirable to minimize part compliance. For example, a part may be subjected to a volume fraction constraint, where only a specified fraction of the initial volume may be allowed to be retained in the solution. The resulting solution using a 5% volume fraction constraint-a condition that may provide a clear design guidance-is shown in FIG. 13 visualized inside the original design space 1202. The surface 1302 may be the isosurface with a threshold structural density of, e.g., 0.25; all material on the inside of the surface 1302 may have a density resulting from the TO solution of greater than 0.25 (on a 0 to 1 scale). The remaining material not enclosed by the surface 1302 is indicated by reference character 1304. The remaining material 1304 may have a structural density of less than 0.25 and may be deemed nonessential.

A feature of the result shown in FIG. 13 is the existence of trusses (legs) connecting fasteners to a front plate. There might not be a leg extending to either middle fastener interfacing with the rest of the assembly. In this illustrative embodiment, the elimination of the middle fasteners may be deemed acceptable after analysis of the remaining four fasteners. If unacceptable, a mitigation strategy may be to require a reaction force at the fastener to ensure the presence of a leg.

In some embodiments, a TO result may be taken as rough guidance for design interpretation using, e.g., SolidWorks, allowing for a further incorporation of AM features and restrictions. FIG. 14A shows the TO concept with a region 1402 circled upon which to enforce a co-planarity rule. These portions may be selected because they were nearly co-planar to begin with. The design interpretation may have moved the legs slightly in order to align them in a plane. The characteristic angle and thickness constraint of the cold spray may be enforced upon the truss (c.f. trapezoidal cross section in FIG. 10D and FIG. 10E), as well as on some or all other features including the front plate which may be interpreted as a planar feature as well. The front face may be significantly thickened compared to the original part to accommodate the additional material around the fastener holes, as suggested by the TO results. The small holes may be drilled and counterbored after material deposition.

FIG. 14B shows an angled view of the junction with smooth curvature between one planar truss and front face. To preserve line-of-sight and sprayability, spray may be performed from the outside. FIG. 14C depicts the spray directions via arrows. In this case, the substrate may be located in the interior.

TO may return what could be described as "elephant feet" (FIG. 13), where the leg is approximately straight to the fastener connection. A cold sprayed truss might not be well-suited to this type of connection. Rather, the cold spray deposit can gradually transition from the plane of the side truss into the horizontal plane. Illustrative feet 1404 and 1406 created on the rear and front legs for this part are shown in FIG. 14D. In some instances, it may be desirable for the feet to curve in the same direction, but fastener requirements may prohibited that from occurring. The fastener holes may be drilled and counterbored following cold spray deposition.

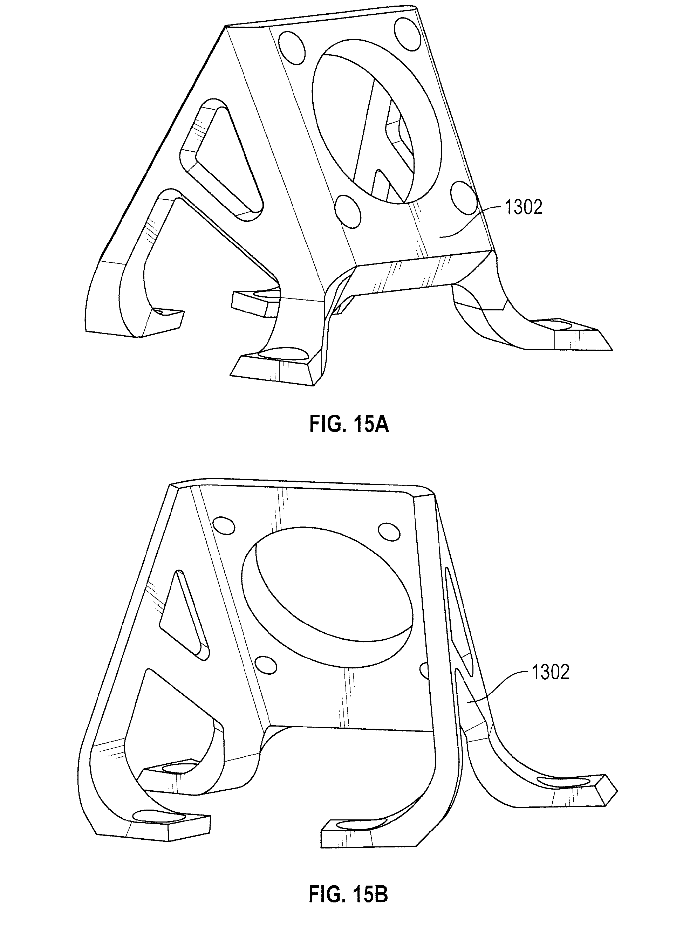

A 3D releasable substrate (FIG. 14E) may be designed to accommodate all of these requirements. The support used sharp drop-offs to define truss features. Based on the design, a spray path including curvature was planned. The resulting interpreted part design, shown in FIGs. 15A-15B, may be significantly more amenable to cold-spraying than the TO result.

FIG. 16A shows the part 1302 still on the support just after being sprayed, while FIG. 16B shows the part 1302 after removal of a mandrel and some post-machining. The planar features are apparent along with the smooth transition between them. The designed leg curvature may be successfully sprayed. The sharp drop-off of the support may allow the truss structure to be well-defined. There may be some excess material deposited on the support and loosely bound to the part 1302 but this extra material may be removed by machining. Improvements in the 3D support design may allow deeper drop-offs and/or a program that controls a robot to improve the spray path may be planned and may reduce regions of excess spray and improve the near-net-shape nature of the deposit. Likewise, the design and optimization guidelines described herein may be continuously improved with more experience.

As described above, some embodiments may incorporate shape optimization or "SO." A solid model meshed with a hexahedral-dominated mesh using HyperMesh and morphing may be performed with a HyperMorph tool. Multiple morphs may be applied to a mesh simultaneously. Design responses may be mass and maximum principal stress, used as objective and constraint, respectively, in the optimization. OptiStruct may treat each individual morph as a design variable and determine an optimum morph application by performing a full FE simulation during one or more iterations.

Mesh morphs may be developed that are consistent with the cold spray process. Care may be taken so that mesh elements do not become distorted. Families of morph strategies include:

change thickness - by creating a vector along the angled edge of a deposit. The handles (e.g., tools to move the nodes) may be simultaneously morphed along this vector, to effectively preserve the characteristic deposition angle. The actual morph distance, m, may be related to the desired thickness change, t, according to the trigonometric relationship in FIG. 17A. The actual morph may be depicted in FIG. 17B and FIG. 17C (handles are the dots, a number of which are circled in FIG. 17B). For faces/edges without a characteristic angle, such as those along a drilled hole, the morphs may be along the vector of the cut, straight rather than angled;

change width - by moving handles simultaneously on the top and bottom edges of one side of a component along a vector normal to the bottom edge of the deposit (FIG. 17D and FIG. 17E);

move truss - by moving simultaneously all top and bottom handles at one end of a truss along a vector aligned along the component that the truss intersects;

rotate leg - by selecting all handles of a leg or other member and rotating around a vector along the edge connecting the leg to the rest of the structure (FIG. 17F and FIG. 17G). The leg terminated in curved segment to the foot which may be adjusted by additional morphs to maintain reasonable and sprayable geometry;

adjust curvature - for irregular (e.g. spline) curvature of the foot to supplement leg rotation (FIG. 17F and FIG. 17G); and

angle augmentation - by adjusting the cross section. FIG. 18A shows the cross section of a cold spray deposit squared and rounded on either side by rotating the cold spray nozzle, e.g., 30° from vertical to augment the deposition. The morph potentially representing this operation on the model mesh is shown in FIG. 18B and FIG. 18C, where FIG. 18B may be representative of the original cross section and FIG. 18C includes arrows to show a morph representing augmentation by a cold spray at an angle.

There may be a number of (e.g., sixteen) specific morphs defined, illustratively indicated by arrows/labels in FIG. 19 and explained in Table 1 shown below. To facilitate reduction of mass, the front face may be divided into five different regions, reflecting the option to cold spray some regions with more passes than others, thus locally increasing the thickness.

TABLE 1 - Morph Labels

| Label | Explanation |
|---|---|
| t | Change thickness of layer |

(continued)

| Label | Explanation |
|---|---|
| w | Change width of region |
| b | Change bolt fixture thickness |
| s | Change screw fixture thickness |
| l | Rotate leg with accompanying morphs |
| f | Augment front corner |
| c | Change curvature of bottom of front leg |
| h | Change height of rear leg intersection |

An optimization objective may be to minimize weight subject to a constraint on the maximum principal stress (defined as max(|P1|,|P3|) of elements, where P1 may be the major principal stress and P3 may be the minor principal stress). The level of the maximum principal stress constraint may be varied to examine the optimized results at different allowable stress levels (this was for demonstration - it is more direct to start with the initial concept and specify one stress constraint level).

SO may deliver weight and stress reductions. FIG. 20 illustrates a plot of fractional mass and fractional stress values. For reference, the weight and stress of the original part to be replaced as well as the initial concept part as interpreted in CAD are shown. The SO results fall along the efficient frontier (Pareto frontier), which illustrates the tradeoff between the maximum principal stress and the mass of the part. The original part (represented by a triangle in FIG. 20) and the initial concept (represented by a square in FIG. 20) are far from the efficient frontier, an indication of the effectiveness of TO followed by SO.

In some instances, an initial concept may be slightly heavier than an original part. This slight increase in mass may result from an accommodation of cold spray constraints in a design interpretation step. This slight increase in mass may be offset, however, by the dramatic (e.g., ~50%) reduction in stress from the original.

Results from six stress constraint cases (illustratively referred to as cases A-F) are shown in Table 2 below. Cases A and E are described in greater detail below to illustrate either extreme of the shape optimization.

TABLE 2 - Stress And Mass Changes From Original Part And Initial Interpreted Concept

| Stress constraint case | Stress change from initial concept | Mass change from initial concept | Stress change from original part | Mass change from original part |
|---|---|---|---|---|
| A | -23% | -28% | -60% | -21% |
| B | -29% | -27% | -63% | -20% |
| C | -34% | -23% | -66% | -16% |
| D | -39% | -19% | -68% | -11% |
| E | -44% | -6% | -71% | 3% |
| F | -49% | -5% | -74% | 4% |

Case A may have had a mass of 79% of the original part and with only 40% of the stress (e.g., a 21% mass reduction, a 60% stress reduction). Case E may have had a 3% higher mass than original part but 29% of the stress, for a 71% stress reduction. The cases B-D between these two points had intermediate mass and stress reductions.

The effect upon the geometry of the (initial) part/concept is shown in FIG. 21. In case A, the rear leg was rotated inward substantially and made much thinner. The thickness of the front face plate was also significantly reduced, more at the bottom of the plate than at the top. The width of the front plate above and below the large hole is also significantly reduced. The initial part/concept is outlined in case A of FIG. 21 in order to provide a basis for comparison. In case E, a number of differences from case A are indicated. Notably, in case E the rear leg is less rotated and is thicker than in case A. The widths and thickness of locations on the front face plate were also larger in case E due to a more aggressive stress constraint.

The design and optimization approach described herein may attempt to capture important geometric features of cold sprayed components using observations from the actual process. Based on one or more assumptions, the analysis may illustrate that a cold sprayed structure can be efficiently designed to meet typical benchmarks for AM and TO: lighter structures that are more mechanically robust. Aspects of this disclosure relate to a shape optimization approach based on stress analysis, but the same part can be optimized for fatigue. Buckling and a dynamic loading analysis may be incorporated as well. Also, a possible interpretation for a different AM processes (not cold spray) is shown in FIG. 22(a-b).

Turning to FIG. 23, a flow chart of an exemplary method 2300 is shown. The method 2300 may be used to design for a repair of a part or component.

In block 2302, an indication of a component to be repaired may be received by, e.g., a computing device. The component to be repaired may already have a specification associated with it. For example, the specification may have been generated to support manufacturing or fabricating the component. The component may have been manufactured or fabricated in accordance with one or more of the techniques described herein.

In block 2304, a specification for the component to be repaired may be optimized. Such optimization may include shape or surface optimization. As part of block 2304, an interface location between first material (e.g., parent material) and second material (e.g., repair material) may be optimized. As part of block 2304, a transition may be designed to account for differences in material properties. The transition may comprise a grading of the first material with the second material. The transition may comprise a grading of the second material (e.g., added material) with a third material.

In block 2306, the component may be repaired based on (e.g., in accordance with) the specification of block 2304.

The method 2300 is illustrative. In some embodiments, one or more of the blocks or operations (or portions thereof) may be optional. In some embodiments, additional operations not shown may be included. In some embodiments, the operations may execute in an order or sequence different from what is shown.

Aspects of this disclosure are associated with geometric design and optimization. Furthermore, aspects of this disclosure may address challenges associated with cold spray manufacturing. For example, an analysis may be performed to determine or confirm that material properties are robust, heat treatments for annealing may be devised, and a development of 3D supports and robot programming may be provided.

Embodiments of the disclosure are directed to additive manufacturing, which is an emerging trend that may provide benefits in terms of, e.g., weight and cost. Spray processes and cold spray in particular may be applied commercially as a method of cost-effective additive manufacturing. An understanding of the nature of components made by these processes, the effect of the process on the deposited material properties, and correlation to the produced part performance may be developed. Such an understanding may be based on a definition of design and optimization guidelines.

Topology optimization and shape optimization may enable efficient structures. Topology optimization and shape optimization may be controlled to deliver results appropriate for a manufacturing process. This disclosure provided a set of design and optimization guidelines for cold spray, including planar features, gradual transition between planes for continuous spraying, line-of-sight and recommended spray direction, leg shape and curvature, characteristic deposition angle and cross-sectional geometry, recognition of limited thickness based on cold spray parameters, and designing for a 3D removable substrate. The feasibility of designing and optimizing a part for cold spray was illustrated and described, including topology optimization, design interpretation with the proposed set of guidelines, and shape optimization using morphs consistent with cold spray characteristics. A tradeoff between stress and mass may be present in some embodiments, but the combined process may deliver a structure at much lower stress and lighter weight compared to an original or initial part. The approach to specifying geometric design requirements, interpreting TO results, and applying shape optimization consistent with the characteristic geometry may be directly applicable to other AM processes, and especially other spray deposition techniques. Design features and morphs may be refined for cold spray characteristics and extended to other AM processes.

Embodiments of the disclosure may use a topology optimization to design, e.g., a consolidated gear and shaft to reduce weight while keeping the structural integrity of the component. Additive manufacturing constraints may be included as part of the topology optimization framework. The techniques may be applied on multiple materials, several parts may be consolidated as one part, and cold spray may be used as an additive manufacturing technique.

Embodiments of the disclosure may be used to optimize and produce parts of functional grading material using cold spray. Structural components may be designed and/or produced. Material may be changed or varied as layers are deposited.

Embodiments of the disclosure may be tied to one or more particular machines. For example, one or more computing devices may be configured to generate an optimum design for a component based on one or more inputs. A computing device may be configured to generate a specification for the component based on the optimum design. The computing device may be configured to fabricate and implement the component based on the specification.

As described herein, in some embodiments various functions or acts may take place at a given location and/or in connection with the operation of one or more apparatuses, systems, or devices. For example, in some embodiments, a portion of a given function or act may be performed at a first device or location, and the remainder of the function or act may be performed at one or more additional devices or locations.

Embodiments may be implemented using one or more technologies. In some embodiments, an apparatus or system may include one or more processors, and memory storing instructions that, when executed by the one or more processors, cause the apparatus or system to perform one or more methodological acts as described herein. Various mechanical components known to those of skill in the art may be used in some embodiments.

Embodiments may be implemented as one or more apparatuses, software or commercial code, systems, and/or methods. In some embodiments, instructions may be stored on one or more computer-readable media, such as a transitory and/or non-transitory computer-readable medium. The instructions, when executed, may cause an entity (e.g., an apparatus or system) to perform one or more methodological acts as described herein. Such media may be stored internally, as in a hard drive, or removable as in an optical disc or digital media. Such media can also be accessible remotely over a network, such as where the program resides on a cloud.

Aspects of the disclosure have been described in terms of illustrative embodiments thereof. Numerous other embodiments, modifications and variations within the scope and spirit of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional.

**Claims**

1. A method comprising:

   receiving, by a computing device (110) comprising a processor (108), a plurality of design and manufacturing constraints associated with a component (602; 1302), the design constraints comprising a desired quality of the component (602; 1302) and the manufacturing constraints comprising a constraint imposed by a manufacturing technique by which the component will be made;
   integrating, by the computing device (100), the design and manufacturing constraints according to a design optimization methodology across a plurality of variables to generate a candidate component specification; and
   performing, by the computing device (100), surface optimization to optimize the candidate component specification according to variations in the design constraints to generate a final specification for the component (602; 1302).

2. The method of claim 1, further comprising receiving the final specification at an additive manufacturing machine (120), and producing the component (602; 1302) according to the final specification using an additive manufacturing technique corresponding to the manufacturing constraints.

3. The method of claim 1 or 2, wherein:

   the design constraints comprise combinations of dimensions of the component, surfaces of the component, and load paths of the component during use; and
   the manufacturing constraints comprise combinations of a line of sight associated with the component during manufacture, an angle associated with the component, an angle between normal and adjacent surfaces of the component, a tolerance associated with the component, and a tooling feature, in addition to mapping of required supports and fixtures.

4. The method of any of claims 1 to 3, wherein the design optimization methodology is specified in terms of at least one of: weight, reliability, performance, complexity, and cost.

5. The method of any of claims 1 to 4, wherein the final specification comprises at least one of: a handling specification, a manufacturing specification, an assembly specification, and a use specification.

6. The method of any of claims 1 to 5, further comprising:

   integrating, by the computing device (100), the design and manufacturing constraints and design optimization methodology with a multi-functional optimization for the component (602; 1302) when generating the final specification for the component,
   wherein the multi-functional optimization comprises an optimization based on at least two competing requirements for the component.

7. The method of any of claims 1 to 6, further comprising:

fabricating the component in accordance with the final specification; and
implementing the fabricated component on at least one of an aircraft and an assembly for the aircraft.

8. The method of any of claims 1 to 7, comprising:

   receiving, by the computing device comprising a processor, an indication of a component to be repaired; and
   performing, by the computing device, shape optimization to optimize a specification for the component by optimizing an interface location between parent material and repair material and
   designing a transition to account for differences in material properties.

9. The method of claim 8, wherein the transition comprises at least one of: a grading of the parent material with the repair material and a grading of the repair material with a third material, the method further comprising:

   repairing the component based on the specification.

10. An apparatus comprising:

    at least one processor (108); and
    memory (102) having instructions stored thereon that, when executed by the at least one processor (108), cause the apparatus to carry out the method according to any of the previous claims.

11. The apparatus of claim 10, wherein:

    the design constraints comprise combinations of dimensions of the component, surfaces of the component, and load paths of the component during use; and
    the manufacturing constraints comprise combinations of a line of sight associated with the component during manufacture, an angle associated with the component, an angle between normal and adjacent surfaces of the component, a tolerance associated with the component, and a fixturing feature.

12. The apparatus of any of claims 10 or 11, wherein the final specification comprises at least one of: a handling specification, additive manufacturing processes specification, an assembly specification, and a use specification.

13. The apparatus of any of claims 10 to 12, wherein the instructions, when executed by the at least one processor, cause the apparatus to:

    integrate the design and manufacturing constraints and design optimization methodology with a multi-functional optimization for the component when generating the final specification for the component; and
    additively manufacture the component in accordance with the final specification,
    wherein the multi-functional optimization comprises an optimization based on at least two competing requirements for the component.

14. A computer readable medium encoded with processing instructions that, when executed by at least one processor, perform the method of any of claims 1 to 9.

**FIG. 1**

200

202 — Identify constraints

204 — Generate design

206 — Optimize for multi-functional uses

208 — Generate specifications

210 — Fabricate according to specifications

212 — Implement on end-item

FIG. 2

Nozzle

FIG. 3

FIG. 4

EP 2 778 992 A1

FIG. 5A

FIG. 5B

EP 2 778 992 A1

602

$F_r$ applied

Shell type element:
Refined
(no triangle elements)

A load transition portion of the
connector was modeled.

Front

Middle

Back

All bolts/rivets/ were
modeled beam element

**FIG. 6**

**Failed Bracket**

**Baseline**

Peak Stress

Peak Stress : X MPa
Mass: Y g

TO

**After Topology Optimization**

Peak Stress : 0.5 X MPa
Mass: 1.08 Y g

SO

**With FGM**

Peak Stress : 0.46 X MPa
Mass: 0.89 Y g

FGM SO

**After Shape Optimization**

Peak Stress : 0.46 X MPa
Mass: 0.97 Y g

FIG. 7

EP 2 778 992 A1

**Design process...**

**② Concept generation eliminates material where it is not needed- only optimum load paths remain**
Rough concept

**③ CAD interpretation-design for the characteristics and constraints of cold spray additive manufacturing**
Front    Rear

Additive Manufacturing ...AM

**① Large volume envelope for concept generation**
Design space

Finite element topology/shape structural optimization
of a part to be additively manufactured by cold spray with single or multiple materials, adhering to detailed manufacturing constraints

**⑦ Fabricate by cold spray**    Planar features    3D support allows easy removal of excess material

Optimized part, sprayed onto support

Well-defined truss structure    Leg curvature

Smooth curvature between planes

Topology Optimization...TO

**⑥ Prepare support**
The part is built on a process- specific support (green)

**FIG. 8A**

EP 2 778 992 A1

## Design for 3D Fabrication by Cold Spray...

**Maximize planar features**

**Example design constraints**
Curvature must allow line of sight by nozzle for spraying as well as collision avoidance

Characteristic deposition angle means trapezoidal truss cross sections and limited thickness

④ **Shape optimization -fine tuning of interpreted design**   Achieve: Lower weight, lower stress, etc.

Initial          Morphed

Identity features, morph, and optimize

Reduce thickness       Reduce width

Fatigue damage can be constrained or optimized

⑤ **Functional grading of material with shape optimization**
Multiple materials, each with a special purpose

Solid back
80% dense metal foam
Solid front

Shape opt.

Optimization of layers independently for best use of material

FIG. 8B

EP 2 778 992 A1

904

902

**FIG. 9A**

902

904

**FIG. 9B**

924

922

**FIG. 9C**

944

942

**FIG. 9D**

FIG. 10A   FIG. 10B   FIG. 10C

FIG. 10D

FIG. 10E

At Maximum Height     Not at Maximum Height

FIG. 10F

FIG. 10G   FIG. 10H

Substrate is Flat

$\theta_1$

1102

**FIG. 11A**

Substrate Drops Off

$\theta_2$

1104

**FIG. 11B**

1120

**FIG. 11C**

CS Deposit

1120

Support with Sharp Drop-off

1120

**FIG. 11D**

1120

Sharp Deposition Angle,
Trapezoidal Cross Section

**FIG. 11E**

**FIG. 11F**

**FIG. 11G**

FIG. 12A

FIG. 12B

FIG. 12C

1220

1220
1202

1304

1220

1220

1220
1302

1220

1220

**FIG. 13**

1302

1402

Features for
Planar Truss

**FIG. 14A**

Side
Truss

Outer Curvature

Front Face

Inner
Curvature

**FIG. 14B**

1302

**FIG. 14C**

1406

Front Leg:
Inward
(Concave)
Curvature

Rear Leg:
Outward
(Convex)
Curvature

1404

**FIG. 14D**

1302

Support

Sprayed Part

**FIG. 14E**

**FIG. 15A**

**FIG. 15B**

Planar features

Planar features

1302

3D support allows easy removal of excess material

Well-defined truss structure

Smooth curvature between planes

Leg curvature

**FIG. 16A**

1302

**FIG. 16B**

$$m = t/\sin\theta$$

FIG. 17A

Handles to translate

Handles to translate

Before morph

Translation vector    Translation vector

FIG. 17B

Reduced thickness

FIG. 17C

Before morph

FIG. 17D

Reduced width

FIG. 17E

Rotation axis

Before morph

FIG. 17F

Rotated back leg

Handles translated down

Altered edge curvature

FIG. 17G

**FIG. 18A**

Original cross section

**FIG. 18B**

Arrows show a morph
representing augmentation
by cold spray at angle

**FIG. 18C**

**FIG. 19**

**Fractional Maximum Principal Stress**

Legend:
- ─O─ SO Result
- □ Initial Concept
- △ Original Part

Efficient Frontier

**FIG. 20**

Initial

Case A

Case E

Primary relationship to case A:

1. Higher
2. Thicker
2. Thicker
2. Thicker
3. Wider
3. Wider
2. Thicker
3. Wider
2. Thicker
2. Thicker
4. Thicker, less rotated

**FIG. 21**

**FIG. 22A**

**FIG. 22B**

2300

2302
Receive indication of component to be repaired

2304
Optimize a specification for the component

2306
Repair component based on the specification

**FIG. 23**

**EUROPEAN SEARCH REPORT**

Europäisches Patentamt
European Patent Office
Office européen des brevets

Application Number

EP 14 15 8745

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | D'EPAGNIER K P ET AL: "An Open Source Parametric Propeller Design Tool", OCEANS 2007, IEEE, PISCATAWAY, NJ, USA, 29 September 2007 (2007-09-29), pages 1-8, XP032392456, DOI: 10.1109/OCEANS.2007.4449400 ISBN: 978-0-933957-35-0 * the whole document * * title * * page 2, column 1, lines 1,2 * * page 2, column 1, paragraph 4 * * page 2, column 1, paragraph 2 * * figure 3 * * page 3, column 2, last paragraph - page 5, column 1, paragraph 2 * | 1-14 | INV. G06F17/50 |
| X | KOU X Y ET AL: "Modeling complex heterogeneous objects with non-manifold heterogeneous cells", COMPUTER AIDED DESIGN, ELSEVIER PUBLISHERS BV., BARKING, GB, vol. 38, no. 5, 1 May 2006 (2006-05-01), pages 457-474, XP027878778, ISSN: 0010-4485 [retrieved on 2006-05-01] | 1-7, 10-14 | |
| A | * the whole document * * figure 17 * * section 4 * * figure 13 * * page 469, column 1 * | 8,9 | TECHNICAL FIELDS SEARCHED (IPC) G06F |

-/--

The present search report has been drawn up for all claims

| Place of search | Date of completion of the search | Examiner |
|---|---|---|
| Munich | 17 July 2014 | Wellisch, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 14 15 8745

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROY R ET AL: "Evolutionary multi-objective design optimisation with real life uncertainty and constraints", CIRP ANNALS, ELSEVIER BV, NL, CH, FR, vol. 58, no. 1, 1 January 2009 (2009-01-01), pages 169-172, XP026120236, ISSN: 0007-8506, DOI: 10.1016/J.CIRP.2009.03.021 [retrieved on 2009-04-10] | 1-7, 10-14 | |
| A | * the whole document * <br> * page 169, column 1, lines 15,16 * <br> * section 2 * <br> * section 5 * <br> * page 171, column 2, paragraph 4, third sentence * | 8,9 | |
| A | XI-JUAN LIU: "Modeling of additive manufacturing process relevant feature in layer based manufacturing process planning", JOURNAL OF SHANGHAI JIAOTONG UNIVERSITY (SCIENCE), SHANGHAI JIAOTONG UNIVERSITY PRESS, HEIDELBERG, vol. 17, no. 2, 11 April 2012 (2012-04-11), pages 241-244, XP035041814, ISSN: 1995-8188, DOI: 10.1007/S12204-012-1260-6 * the whole document * <br> * page 241, column 2, paragraph 3 - page 242, column 1, paragraph 1 * <br> * section 2 * | 1-14 | TECHNICAL FIELDS SEARCHED (IPC) |
| A | US 2011/311389 A1 (RYAN DANIEL [US] ET AL) 22 December 2011 (2011-12-22) * the whole document * <br> * paragraph [0027] - paragraph [0030] * | 1-14 | |

The present search report has been drawn up for all claims

| Place of search | Date of completion of the search | Examiner |
|---|---|---|
| Munich | 17 July 2014 | Wellisch, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 15 8745

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2014

| Patent document cited in search report | Publication date | Patent family member(s) | Publication date |
|---|---|---|---|
| US 2011311389 A1 | 22-12-2011 | NONE | |

For more details about this annex : see Official Journal of the European Patent Office, No. 12/82

**EP 2 778 992 A1**

**Patent documents cited in the description**

- US 61792734 A